# EUROPÄISCHE PATENTSCHRIFT

(11) **EP 3 439 068 B1**
(45) Veröffentlichungstag und Bekanntmachung des Hinweises auf die Patenterteilung: **01.05.2024**
(21) Anmeldenummer: 18180006.1
(22) Anmeldetag: 27.06.2018
(51) Int. Cl.: H01M 50/213, H01M 50/247, H01M 50/287, H01M 10/42, H01M 10/48, H01M 50/202

(54) **AKKUPACK**
BATTERY PACK
BLOC BATTERIE

(30) Priorität: 01.08.2017 DE 102017213307
(43) Veröffentlichungstag der Anmeldung: 06.02.2019
(73) Patentinhaber: Robert Bosch GmbH, 70442 Stuttgart (DE)
(72) Erfinder: Rejman, Marcin, 71334 Waiblingen (DE); Klee, Christoph, 70599 Stuttgart (DE)

(56) Entgegenhaltungen:
- WO-A1-2016/170799
- DE-A1-102005 000 135
- DE-A1-102015 218 447
- DE-U1-202015 105 602

## Beschreibung

### Stand der Technik

Es sind bereits Akkupacks bekannt, die Leiterplatten mit Leuchtdioden aufweisen und die zum Schutz der Leiterplatten vor leitfähigen Verunreinigungen, wie Staub oder Feuchtigkeit, über diverse Maßnahmen, wie beispielsweise eine Schutzbeschichtung in Form eines Isolierlacks oder den Verbau transparenter Vergussmassen, verfügen. Die WO 2016/170799 zeigt ebenfalls einen Handwerkzeugmaschinenakkupack mit Leuchtdioden.

### Offenbarung der Erfindung

Die Erfindung betrifft einen Akkupack, insbesondere einen Handwerkzeugmaschinenakkupack, mit einem Gehäuse, in welchem zumindest eine Akkuzelle und eine eine Leiterplatte umfassende Elektronik angeordnet sind, wobei auf der Leiterplatte zumindest ein Leuchtelement angeordnet ist. Erfindungsgemäß ist zwischen dem zumindest einen Leuchtelement und dem Gehäuse ein elastisches und transparentes Schutzelement angeordnet.

Vorteilhaft kann dadurch die Lebensdauer der Elektronik erhöht werden.

Das Gehäuse des Akkupacks weist vorzugsweise eine mechanische Schnittstelle auf, über die das Gehäuse des Akkupacks lösbar mit einem Verbraucher und/oder einem Ladegerät verbindbar ist. Der Verbraucher kann insbesondere als ein Gartengerät, wie beispielsweise ein Rasenmäher oder eine Heckenschere, als eine Handwerkzeugmaschine, wie beispielsweise ein Winkelschleifer, ein Schrauber, eine Bohrmaschine, ein Bohrhammer, etc. oder als ein Messwerkzeug, wie beispielsweise ein Laserentfernungsmessgerät, ausgebildet sein. Des Weiteren ist auch denkbar, dass der Verbraucher als ein anderes insbesondere tragbares Gerät ausgebildet ist, wie beispielsweise eine Baustellenbeleuchtung, ein Absauggerät oder ein Baustellenradio. Über die mechanische Schnittstelle ist der Akkupack kraft- und/oder formschlüssig mit dem Verbraucher verbindbar. Vorteilhaft umfasst die mechanische Schnittstelle zumindest ein Betätigungselement, über das die Verbindung des Akkupacks mit dem Verbraucher lösbar ist. Des Weiteren umfasst der Akkupack zumindest eine Akkuzelle und eine elektrische Schnittstelle, über die die zumindest eine Akkuzelle mit dem Verbraucher elektrisch verbindbar ist. Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Insbesondere weist die Akkuzelle an einem Ende einen positiven Zellpol und an einem gegenüberliegenden Ende einen negativen Zellpol auf. Bevorzugt sind die Ackuzellen als NiCd- oder NiMh-, besonders bevorzugt als lithiumbasierte Akkuzellen, ausgebildet. Die Akkuspannung des Akkupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhaft Akkuspannung von 3,6 V, 7,2 V, 10,8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind. Die elektrische Schnittstelle umfasst insbesondere zumindest zwei elektrische Kontaktelemente, die zur Übertragung von Energie ausgebildet sind. Alternativ kann die elektrische Schnittstelle ein sekundäres Ladespulenelement zur induktiven Ladung aufweisen.

Zusätzlich kann die elektrische Schnittstelle weitere Kontaktelemente aufweisen, die dazu ausgebildet sind, zusätzliche Informationen, die beispielhaft über die Elektronik ermittelt werden, an den Verbraucher zu übertragen. Dabei kann es sich beispielsweise um einen Ladezustand des Akkupacks, eine Temperatur innerhalb des Akkupacks, eine Codierung oder einer Restkapazität des Akkupacks handeln. Zudem ist denkbar, dass die Elektronik dazu ausgebildet ist, den Lade- und/oder Entladevorgang des Akkupacks zu regeln oder zu steuern. Die Elektronik kann beispielsweise eine Leiterplatte, eine Recheneinheit, einen Transistor, einen Kondensator, und/oder einen Speicher aufweisen. Die Elektronik kann zudem ein oder mehrere Sensorelemente aufweisen, beispielsweise zur Ermittlung der Temperatur innerhalb des Akkupacks. Die Elektronik kann alternativ oder zusätzlich ein Codierungselement, wie beispielsweise ein Codierungswiderstand, aufweisen.

Das Leuchtelement ist insbesondere dazu ausgebildet, einen Ladezustand des Akkupacks anzuzeigen. Der Ladezustand wird insbesondere über einen Anzeigezustand des Leuchtelements angezeigt. Zusätzlich oder alternativ ist auch denkbar, dass über das Leuchtelement oder über ein weiteres Leuchtelement ein anderer für den Betrieb des Akkupacks relevanten Betriebsparameter anzeigbar ist. Bei dem Betriebsparameter kann es sich beispielsweise um die Temperatur des Akkupacks oder um das Vorhandensein von Störungen handeln. Bei dem Anzeigezustand kann es sich beispielsweise um einen eingeschalteten oder ausgeschalteten Zustand des Leuchtelements, um eine Intensität, um eine Farbe, oder um eine Modulation, wie beispielsweise ein Blinken, handeln. Vorzugsweise weist der Akkupack mehrere Leuchtelemente auf. Das Leuchtelement ist vorzugsweise elektrisch und/oder mechanisch mit der Elektronik, insbesondere mit der Leiterplatte der Elektronik, verbunden. Das Leuchtelement ist bevorzugt derart im Gehäuse des Akkupacks angeordnet, dass der Anzeigezustand des Leuchtelements von außen sichtbar ist. Insbesondere ist das Leuchtelement im Bereich einer Öffnung im Gehäuse oder im Bereich eines Fensterelements, das im Gehäuse eingelassen ist, angeordnet.

Das Schutzelement ist vorzugsweise aus einem Polymer ausgebildet. Das Schutzelement ist insbesondere als ein Polymerfilm ausgebildet. Vorzugsweise beträgt die Dicke des Schutzelements zumindest 1 mm, bevorzugt zumindest 2 mm. Das Schutzelement ist insbesondere derart elastisch ausgebildet, dass es unter Krafteinwirkung seine Form verändert und bei Wegfall der einwirkenden Kraft im Wesentlichen in die Ursprungsform zurückgehrt. Das Schutzelement ist insbesondere um zumindest 10 % seiner Dicke, vorzugsweise um zumindest 25 % seiner Dicke, bevorzugt um zumindest 50 % seiner Dicke, stauchbar ausgebildet. Das Schutzelement ist vorzugsweise auf zumindest einer Seite klebend ausgebildet. Das Schutzelement ist derart transparent ausgebildet, dass zumindest 90 %, vorzugsweise zumindest 50 %, bevorzugt zumindest 10 % des von dem Leuchtelement emittierten Lichts das Schutzelement passiert. Vorzugsweise ist das Schutzelement im Wesentlichen farblos ausgebildet.

Des Weiteren wird vorgeschlagen, dass auf der Leiterplatte zumindest ein Bedienelement angeordnet ist. Vorteilhaft kann dadurch eine Bedienung des Leuchtelements ermöglicht werden. Das Bedienelement kann als ein Schalter oder als ein Taster ausgebildet sein. Das Bedienelement ist elektrisch und/oder mechanische mit der Elektronik, insbesondere der Leiterplatte, verbunden. Über eine Betätigung des Bedienelements ist das Leuchtelement aktivierbar.

Erfindungsgemäß liegt das Schutzelement an dem Leuchtelement an der Leiterplatte und an dem Bedienelement, an. Vorteilhaft kann dadurch der Schutz der Elektronik verbessert werden. Vorzugsweise beaufschlagt das Schutzelement die Leiterplatte zumindest teilweise, insbesondere vollständig, mit einer Kraft. Zudem wird vorgeschlagen, dass das Schutzelement an dem Gehäuse, insbesondere an einem transparenten Bereich des Gehäuses, anliegt. Vorteilhaft kann dadurch ein Eindringen von Staub oder Feuchtigkeit im Bereich der Elektronik verhindert werden. Insbesondere beaufschlagt das Schutzelement das Gehäuse teilweise mit einer Kraft. Vorzugsweise beaufschlagt das Schutzelement ein Gehäuseteil des Gehäuses im Wesentlichen vollständig mit einer Kraft. Bevorzugt ist das Schutzelement zwischen der Leiterplatte und dem Gehäuse verpresst. Des Weiteren wird vorgeschlagen, dass das Schutzelement derart elastisch ausgebildet ist, dass eine mechanische Belastung der Elektronik, insbesondere der Elektronik im Bereich des Leuchtelements, durch das Schutzelement gedämpft ist. Vorteilhaft wird dadurch der Schutz der Elektronik weiter verbessert. Das Schutzelement ist im montierten Zustand insbesondere um maximal 10 % seiner maximalen Stauchung, vorzugsweise um maximal 25 % seiner maximalen Stauchung, bevorzugt um maximal 50 % seiner maximalen Stauchung, gestaucht, wodurch vorteilhaft bei Einwirkung einer mechanischen Belastung diese durch eine weitere Stauchung des Schutzelements gedämpft werden kann.

Weiterhin wird vorgeschlagen, dass das Schutzelement derart elastisch ausgebildet ist, dass das Bedienelement über eine Kraft auf das Gehäuse betätigbar ist. Vorteilhaft kann dadurch eine kostengünstige Konstruktion des Akkupacks ermöglicht werden.

Zudem wird vorgeschlagen, dass die Größe des Schutzelements an die Leiterplatte und/oder an das zumindest eine Leuchtelement angepasst ist. Vorteilhaft kann dadurch eine kompakte Konstruktion und ein guter Schutz ermöglicht werden. Die Größe des Schutzelements ist insbesondere derart ausgebildet, dass sämtliche elektronische Komponenten und elektrische Verbindungen bzw. Kontaktstellen sowie das Leuchtelemente von dem Schutzelement bedeckt ist.

Des Weiteren wird vorgeschlagen, dass die Größe einer Seitenfläche des Schutzelements im Wesentlichen der Größe einer Seitenfläche der Leiterplatte entspricht. Vorteilhaft können durch diese Maßnahme die gesamte Leiterplatte und die sich auf ihr befindlichen elektronischen Komponenten durch das Schutzelement effektiv geschützt werden.

Weiterhin wird vorgeschlagen, dass die Größe des Schutzelements an die Größe eines Gehäuseteils des Gehäuses angepasst ist. Vorteilhaft kann dadurch sichergestellt werden, dass an der Grenzfläche zwischen zwei miteinander verbundenen Gehäuseteilen kein Staub in das Gehäuse eindringt.

Zudem wird vorgeschlagen, dass eine Dicke des Schutzelements zumindest einer Höhe der Elektronik, insbesondere zumindest einer Höhe des Bedienelements oder zumindest einer Höhe des Leuchtelements entspricht. Vorteilhaft kann durch diese Maßnahme der Schutz der Elektronik weiter verbessert werden.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines erfindungsgemäßen Akkupacks;
- Fig. 2: eine perspektivische Ansicht des Akkupacks gemäß Fig. 1 mit teilweise entferntem Gehäuse;
- Fig. 3: einen Querschnitt durch ein erfindungsgemäßes Schutzelement.

### Beschreibung der Ausführungsbeispiele

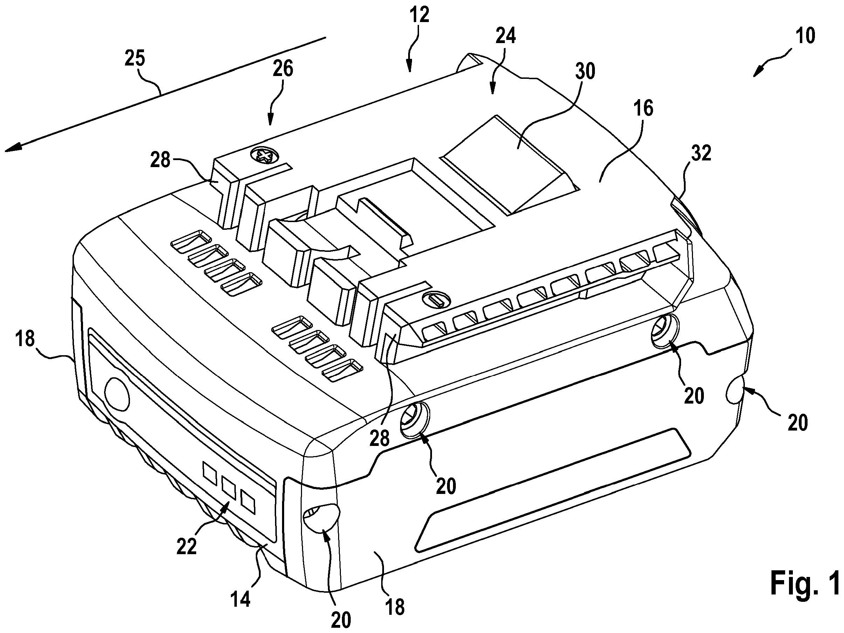

In Fig. 1 ist ein erfindungsgemäßer Akkupack 10 gezeigt. Der Akkupack 10 ist als ein Handwerkzeugmaschinenakkupack ausgebildet und derart elektrisch und mechanisch mit einer Handwerkzeugmaschine (nicht dargestellt) verbindbar ausgebildet, dass die Handwerkzeugmaschine über den Akkupack 10 mit Energie versorgt werden kann. Der Akkupack weist ein Gehäuse 12 auf, das mehrteilig ausgebildet ist. Das Gehäuse 12 weist auf seiner Unterseite einen Grundkörper 14, auf seiner Oberseite ein Schnittstellengehäuseteil 16 und an seinen Seitenflächen zwei gegenüberliegende Seitenwände 18 auf. Das Gehäuse 12 ist als ein Außengehäuse ausgebildet. Die Gehäuseteile 14, 16, 18 sind über Schraubverbindungen 20 miteinander verbunden. Auf der Vorderseite des Akkupacks 10 ist eine Ladezustandsanzeige 22 angeordnet, über die der Ladezustand des Ackupacks 10 anzeigbar ist. Die Ladezustandsanzeige 22 ist im Gehäuse 12, insbesondere im Grundkörper 14, integriert. Das Gehäuse 12, insbesondere das Schnittstellengehäuseteil 16, umfasst eine mechanische Schnittstelle 24 und eine elektrische Schnittstelle 26. Die mechanische Schnittstelle 24 und die elektrische Schnittstelle 26 sind zum werkzeuglos lösbaren Anbringen und zur elektrischen Verbindung des Akkupacks 10 an einer Handwerkzeugmaschine oder an einem Ladegerät (nicht dargestellt), die jeweils eine korrespondierende mechanische und elektrische Schnittstelle aufweisen, ausgebildet.

Der Akkupack 10 ist beispielhaft als Schiebeakkupack ausgebildet. Beim Anbringen des Akkupacks 10 werden Aufnahmemittel, z. B. Führungsnuten und Führungsrippen, der Handwerkzeugmaschine oder des Ladegerätes zur Aufnahme der korrespondierenden Führungselemente 28 des Akkupacks 10 mit diesen in Eingriff gebracht, wobei der Akkupack 10 in einer Einschubrichtung 25 entlang der Aufnahmemittel eingeführt und die mechanische Schnittstelle 24 des Akkupacks 10 in die korrespondierende mechanische Schnittstelle der Handwerkzeugmaschine oder die korrespondierende Schnittstelle des Ladegerätes eingeschoben wird. Zur Verriegelung des Akkupacks 10 mit der Handwerkzeugmaschine oder mit dem Ladegerät weist die mechanische Schnittstelle 24 ein Verriegelungselement 30 auf. Das Verriegelungselement 30 ist als ein federbelastetes Rastelement ausgebildet, das schwenkbar im Gehäuse 12 des Akkupacks gelagert ist. Die Verriegelung erfolgt über ein Einschieben des Akkupacks 10 entlang der Einschubrichtung 25, wobei das Verriegelungselement 30 am Ende der Einschubbewegung in eine Hinterschnittstellung einrastet. Zum Lösen der Verriegelung weist die mechanische Schnittstelle 24 ein Betätigungselement 32 auf, das mit dem Verriegelungselement 30 beweglich gekoppelt ist. Durch eine Betätigung des Betätigungselements 32 bewegt sich das Verriegelungselement 30 in das Gehäuse 12 des Akkupacks 10 hinein und die Verriegelung zwischen dem Akkupack und der Handwerkzeugmaschine bzw. dem Ladegerät wird gelöst.

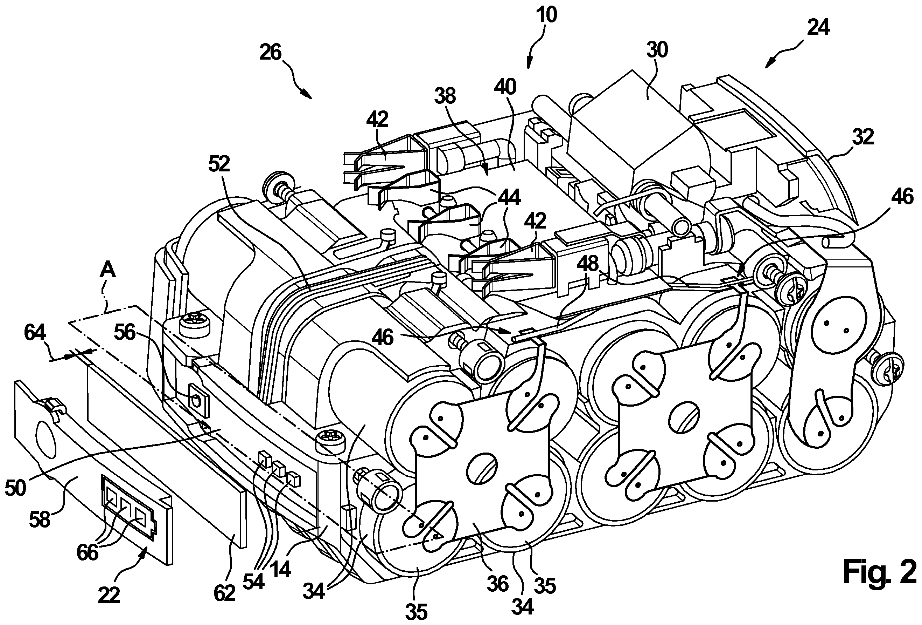

In Fig. 2 ist der Akkupack 10 ohne das Schnittstellengehäuseteil 16 und ohne die Seitenwände 18 gezeigt. Der Grundkörper 14 des Gehäuses 12 weist einen Zellenhalterbereich auf. Im Zellenhalterbereich ist zumindest eine Akkuzelle 34 aufgenommen, wobei der Akkupack 10 in dieser Ausführungsform beispielhaft zehn parallel bzw. seriell verschaltete Akkuzellen 34 aufweist. Alternativ ist auch denkbar, dass die Akkuzellen 34 mittels Papphülsen zur Isolation der Akkuzellen 34 untereinander verbunden sind. Die Akkuzellen 34 sind zylinderförmig ausgebildet und weisen an ihren Stirnflächen elektrische Zellpole 35 auf. Die Verbindung der Akkuzellen 34 untereinander wird über Zellverbinder 36 realisiert. Die Zellverbinder 36 sind zur elektrischen Verschaltung der Akkuzellen 34 untereinander in Parallel- und/oder Reihenschaltung ausgebildet. In der dargestellten Ausführungsform sind jeweils zwei oder vier Akkuzellen 34 über Zellverbinder 36 miteinander verbunden. Ferner ist zu erkennen, dass die einzelnen Akkuzellen 34 zur mechanischen Fixierung in dem Zellenhalterbereich des Grundkörpers 14 beabstandet voneinander aufgenommen sind. Der Zellenhalterbereich dient neben der Fixierung der Akkuzellen 34 in dem Gehäuse 12 auch zur Kühlung der Akkuzellen 34 und wird aus einem wärmeleitfähigen Material, beispielsweise Aluminium oder einem gut wärmeleitenden Kunststoff, gebildet. Des Weiteren weist der Zellenhalterbereich hülsenartige Isolierwandungen auf, so dass die einzelnen Ackuzellen 34 separiert werden und eine elektrische Isolierung der einzelnen Ackuzellen 34 voneinander gewährleistet werden kann. Der Wärmeübergangswiderstand zwischen den benachbarten Akkuzellen 34 und zwischen den Akkuzellen 34 und dem Zellenhalterbereich ist dabei möglichst gering, so dass die von den Akkuzellen 34 erzeugte Verlustwärme gut nach außen abgeführt und eine Überhitzung des Akkupacks 10 im Inneren verhindert werden kann.

Oberhalb des Zellenhalterbereichs, insbesondere im Bereich zwischen dem Grundkörper 14 und dem Schnittstellengehäuseteil 16, ist eine Elektronik 38 angeordnet. Die Elektronik 38 umfasst eine erste Leiterplatte 40. Die Elektronik 38 ist mit einer zweiten Leiterplatte 50 verbunden, die der Ladezustandsanzeige 22 zugeordnet ist. Auf der ersten Leiterplatte 40 sind elektrische Kontaktelemente 42, die zum Laden und Entladen des Akkupacks 10 vorgesehen sind, und weitere Kontaktelemente 44, die zur Übermittlung von Zustandsinformationen, wie beispielsweise des Ladezustands oder der Temperatur des Akkupacks 10, an die Handwerkzeugmaschine oder das Ladegerät ausgebildet sind, angeordnet. Die elektrischen Kontaktelemente 42 und die weiteren Kontaktelemente 44 sind der elektrischen Schnittstelle 26 zugeordnet. Die elektrischen Kontaktelemente 42 sind mit der Elektronik 38 und mit den Akkuzellen 34 verbunden. Die elektrische Verbindung der elektrischen Kontaktelemente 42 mit den Akkuzellen 34 erfolgt über als Lötstellen ausgebildete Kontaktstellen 46, an denen die Akkuzellen 34 über die Zellverbinder 36 mit als Drähte ausgebildeten elektrischen Verbindungselementen 48 verlötet sind. Alternativ ist auch ein Verschweißen des Zellverbinders 36 mit dem elektrischen Verbindungselement 48 denkbar. Die Lötstellen 46 sind zwischen der Elektronik 38 und den Akkuzellen 34 angeordnet. Die Lötstellen 46 sind insbesondere unterhalb der Elektronik 38 und oberhalb der Akkuzellen 34 angeordnet.

Die zweite Leiterplatte 50 ist ebenfalls der Elektronik 38 zugeordnet. Die erste Leiterplatte 40 ist mit der zweiten Leiterplatte 50 über eine Kabelverbindung 52 verbunden. Die zweite Leiterplatte 50 ist im Wesentlichen senkrecht zu der ersten Leiterplatte 40 angeordnet. Die zweite Leiterplatte 50 wird bei der Montage in das Gehäuse 12, insbesondere in den Grundkörper 14 des Gehäuses 12, eingelegt bzw. eingeklemmt. Auf der zweiten Leiterplatte 50 sind drei Leuchtelemente 54 und ein Bedienelement 56 angeordnet. Die Leuchtelemente 54 werden insbesondere über die Elektronik 38 gesteuert. Die Leuchtelemente 54 sind beispielhaft als Leuchtdioden ausgebildet. Die Leuchtdioden können derart ausgebildet sein, dass sie einfarbiges Licht oder Licht in unterschiedlichen Farben aussenden. Ein voller Akkustand wird beispielhaft über drei aktivierte grüne Leuchtelemente 54 angezeigt und ein leerer Akkustand wird über ein aktiviertes rotes oder grünes Leuchtelement 54 angezeigt. Das Bedienelement 56 ist als ein Taster ausgebildet und mit der Elektronik 38 verbunden. Bei einer Betätigung des Bedienelements 56 werde über die Elektronik 38 die Leuchtelemente 54 derart angesteuert, dass der aktuelle Ladezustand des Akkupacks 10 über die Leuchtelemente 54 anzeigt. Vorzugsweise werden die Leuchtelemente 54 nach wenigen Sekunden wieder deaktiviert.

Im Bereich der zweiten Leiterplatte 50 weist das Gehäuse 12 ein weiteres Gehäuseteil 58 auf, das verbindbar mit dem Grundkörper 14 ist. Die Verbindung zwischen dem Grundkörper 14 und dem weiteren Gehäuseteil 58 erfolgt insbesondere über eine kraft- und formschlüssige Verbindung. Vorzugsweise wird das weitere Gehäuseteil 58 in den Grundkörper 14 eingeklippst. Der Grundkörper 14 und das weitere Gehäuseteil 58 spannen einen Raum auf, in welchem die zweite Leiterplatte 50 aufgenommen ist. Innerhalb des Raums ist ein Schutzelement 62 angeordnet, welches dazu ausgebildet ist, die Elektronik 38, insbesondere die zweite Leiterplatte 50 vor Staub und/oder Flüssigkeit zu schützen.

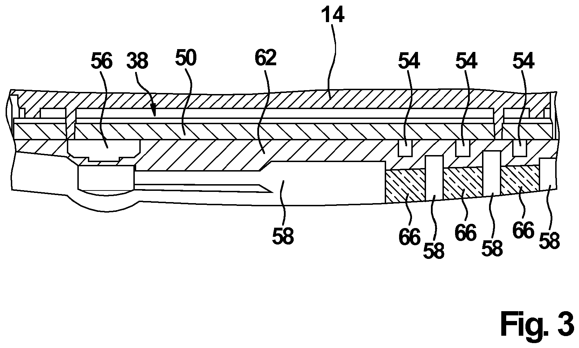

In Fig. 3 ist ein Querschnitt durch die Ebene A, die in der Fig. 2 eingezeichnet ist, gezeigt. Das Schutzelement 62 ist derart zwischen der Elektronik 38 und dem Gehäuse 12 angeordnet, dass es auf der einen Seite an der zweiten Leiterplatte 50, an den Leuchtelementen 54 und dem Bedienelement 56 und auf der gegenüberliegenden Seite an dem weiteren Gehäuseteil 58 anliegt. Das Schutzelement 62 weist vor der Montage eine im Wesentlichen gleichmäßige Dicke 64 auf. Im montierten Zustand ist das Schutzelement 62 zwischen der Elektronik 38 und dem Gehäuse 12 gestaucht. Beispielhaft ist das Schutzelement 62 im Wesentlichen an jedem Punkt gestaucht, was vorteilhafte Auswirkungen auf die dämpfende Wirkung des Schutzelements 62 hat. Es ist allerdings auch denkbar, dass das Schutzelement 62 nur bereichsweise gestaucht ist. Beispielhaft variiert das Maß der Stauchung in einem Bereich zwischen ca. 5 % und 50 % der Dicke 64 des Schutzelements 62. Das Schutzelement 62 ist zudem stoffschlüssig mit den Leuchtelementen 54 bzw. mit der zweiten Leiterplatte 50 verbunden. Das Schutzelement 62 ist einseitig klebend ausgebildet. Insbesondere liegt eine Seitenfläche des Schutzelements 62, die eine klebende Oberflächenbeschichtung aufweist, an den Leuchtelementen 54 bzw. an der zweiten Leiterplatte 50 an.

Damit das von den Leuchtelementen 54 emittierte Licht von außerhalb erkennbar ist, weist das Gehäuse 12 bzw. das weitere Gehäuseteil 58 im Bereich der Leuchtelemente 54 Öffnungen auf, in welchen Fensterelemente 66 angeordnet sind. Die Fensterelemente 66 sind beispielhaft aus einem transparenten Kunststoff ausgebildet. Das weitere Gehäuseteil 58 ist vorteilhaft einstückig mit den Fensterelementen 66 über ein Mehrkomponenten-Spritzgießverfahren ausgebildet. Alternativ ist auch denkbar, dass die Fensterelemente 66 als eine transparente Blende ausgebildet sind, die kraft- und/oder formschlüssig mit dem weiteren Gehäuseteil 58 verbindbar ist.

## Patentansprüche

1. Akkupack, insbesondere Handwerkzeugmaschinenakkupack, mit einem Gehäuse (12), in welchem zumindest eine Akkuzelle (34) und eine eine Leiterplatte (50) umfassende Elektronik (38) angeordnet sind, wobei auf der Leiterplatte (50) zumindest ein Leuchtelement (54) angeordnet ist, wobei auf der Leiterplatte (50) zumindest ein Bedienelement (56) angeordnet ist
**dadurch gekennzeichnet, dass**
zwischen dem zumindest einen Leuchtelement (54) und dem Gehäuse (12) ein elastisches und transparentes Schutzelement (62) angeordnet ist, wobei das Schutzelement (62) an dem Leuchtelement (54), an der Leiterplatte (50) und an dem Bedienelement (56) anliegt.

2. Akkupack nach Anspruch 1, **dadurch gekennzeichnet, dass** das Schutzelement (62) an dem Gehäuse (12), insbesondere an einem transparenten Bereich des Gehäuses (12), anliegt.

3. Akkupack nach einem der vorhergehenden Ansprüche, **dadurch gekennzeichnet, dass** das Schutzelement (62) derart elastisch ausgebildet ist, dass eine mechanische Belastung der Elektronik (38), insbesondere der Elektronik (38) im Bereich des Leuchtelements (54), durch das Schutzelement (62) gedämpft ist.

4. Akkupack nach einem der vorhergehenden Ansprüche, **dadurch gekennzeichnet, dass** das Schutzelement (62) derart elastisch ausgebildet ist, dass das Bedienelement (56) über eine Kraft auf das Gehäuse (12) betätigbar ist.

5. Akkupack nach einem der vorhergehenden Ansprüche, **dadurch gekennzeichnet, dass** die Größe des Schutzelements (62) an die Leiterplatte (50) und/oder das zumindest eine Leuchtelement (54) derart angepasst ist, sämtliche elektronische Komponenten und elektrische Verbindungen bzw. Kontaktstellen sowie das Leuchtelemente von dem Schutzelement bedeckt sind.

6. Akkupack nach einem der vorhergehenden Ansprüche, **dadurch gekennzeichnet, dass** die Größe einer Seitenfläche des Schutzelements (62) im Wesentlichen der Größe einer Seitenfläche der Leiterplatte (50) entspricht.

7. Akkupack nach einem der vorhergehenden Ansprüche, **dadurch gekennzeichnet, dass** die Größe des Schutzelements (62) an die Größe eines Gehäuseteils (58) des Gehäuses (12) angepasst ist.

8. Akkupack nach einem der vorhergehenden Ansprüche, **dadurch gekennzeichnet, dass** eine Dicke (64) des Schutzelements (62) zumindest einer Höhe der Elektronik (38), insbesondere zumindest einer Höhe des Bedienelements (56) oder des Leuchtelements (54), entspricht.

9. Akkupack nach einem der vorhergehenden Ansprüche, **dadurch gekennzeichnet, dass** das Schutzelement (62) aus einem Polymerfilm ausgebildet ist.

10. Akkupack nach einem der vorhergehenden Ansprüche, **dadurch gekennzeichnet, dass** das Schutzelement (62) unter Krafteinwirkung seine Form verändert und bei Wegfall der einwirkenden Kraft in die Ursprungsform zurückgehrt.

11. Akkupack nach einem der vorhergehenden Ansprüche, **dadurch gekennzeichnet, dass** das Schutzelement um zumindest 10 % seiner Dicke stauchbar ausgebildet ist.

12. Akkupack nach einem der vorhergehenden Ansprüche, **dadurch gekennzeichnet, dass** das Schutzelement (62) im montierten Zustand insbesondere um maximal 10 % seiner maximalen Stauchung, vorzugsweise um maximal 25 % seiner maximalen Stauchung, bevorzugt um maximal 50 % seiner maximalen Stauchung gestaucht ausgebildet ist.

## Claims

1. Battery pack, in particular battery pack for a handheld power tool, comprising a housing (12) in which at least one battery cell (34) and an electronic system (38) comprising a printed circuit board (50) are arranged, wherein at least one light-emitting element (54) is arranged on the printed circuit board (50), wherein at least one operating element (56) is arranged on the printed circuit board (50),
**characterized in that**
an elastic and transparent protective element (62) is arranged between the at least one light-emitting element (54) and the housing (12), wherein the protective element (62) rests against the light-emitting element (54), the printed circuit board (50) and the operating element (56) .

2. Battery pack according to Claim 1, **characterized in that** the protective element (62) rests against the housing (12), in particular against a transparent region of the housing (12).

3. Battery pack according to either of the preceding claims, **characterized in that** the protective element (62) is designed to be elastic in such a way that a mechanical load of the electronic system (38), in particular of the electronic system (38) in the region of the light-emitting element (54), is damped by the protective element (62).

4. Battery pack according to any of the preceding claims, **characterized in that** the protective element (62) is designed to be elastic in such a way that the operating element (56) is actuable by way of a force acting on the housing (12).

5. Battery pack according to any of the preceding claims, **characterized in that** the size of the protective element (62) is adapted to the printed circuit board (50) and/or the at least one light-emitting element (54) in a manner such that all electronic components and electrical connections or contact points and the light-emitting element are covered by the protective element.

6. Battery pack according to any of the preceding claims, **characterized in that** the size of a side face of the protective element (62) substantially corresponds to the size of a side face of the printed circuit board (50) .

7. Battery pack according to any of the preceding claims, **characterized in that** the size of the protective element (62) is adapted to the size of a housing part (54) of the housing (12).

8. Battery pack according to any of the preceding claims, **characterized in that** a thickness (64) of the protective element (62) corresponds at least to a height of the electronic system (38), in particular at least to a height of the operating element (56) or of the light-emitting element (54).

9. Battery pack according to any of the preceding claims, **characterized in that** the protective element (62) is formed from a polymer film.

10. Battery pack according to any of the preceding claims, **characterized in that** the protective element (62) changes its shape when a force is applied and returns to the original shape when the force is no longer applied.

11. Battery pack according to any of the preceding claims, **characterized in that** the protective element is designed to be compressible by at least 10% of its thickness.

12. Battery pack according to any of the preceding claims, **characterized in that** the protective element (62) in its mounted state is designed to be compressed in particular by at most 10% of its maximum compression, preferably by at most 25% of its maximum compression, with preference by at most 50% of its maximum compression.

## Revendications

1. Bloc d'accumulateur, en particulier bloc d'accumulateur pour machine-outil à main, comprenant un boîtier (12) dans lequel au moins une cellule d'accumulateur (34) et une électronique (38) comprenant une carte de circuits imprimés (50) sont disposées, au moins un élément lumineux (54) étant disposé sur la carte de circuits imprimés (50), au moins un élément de commande (56) étant disposé sur la carte de circuits imprimés (50),
**caractérisé en ce**
**qu'**un élément de protection (62) élastique et transparent est disposé entre ledit au moins un élément lumineux (54) et le boîtier (12), l'élément de protection (62) étant adjacent à l'élément lumineux (54), à la carte de circuits imprimés (50) et à l'élément de commande (56).

2. Bloc d'accumulateur selon la revendication 1, **caractérisé en ce que** l'élément de protection (62) est adjacent au boîtier (12), en particulier à une zone transparente du boîtier (12).

3. Bloc d'accumulateur selon l'une quelconque des revendications précédentes, **caractérisé en ce que** l'élément de protection (62) est réalisé de manière élastique de telle sorte qu'une contrainte mécanique de l'électronique (38), en particulier de l'électronique (38) au niveau de l'élément lumineux (54), est amortie par l'élément de protection (62).

4. Bloc d'accumulateur selon l'une quelconque des revendications précédentes, **caractérisé en ce que** l'élément de protection (62) est réalisé de manière élastique de telle sorte que l'élément de commande (56) peut être actionné par une force sur le boîtier (12).

5. Bloc d'accumulateur selon l'une quelconque des revendications précédentes, **caractérisé en ce que** la taille de l'élément de protection (62) est adaptée à la carte de circuits imprimés (50) et/ou audit au moins un élément lumineux (54) de telle sorte que tous les composants électroniques et les connexions électriques ou points de contact ainsi que l'élément lumineux sont recouverts par l'élément de protection.

6. Bloc d'accumulateur selon l'une quelconque des revendications précédentes, **caractérisé en ce que** la taille d'une face latérale de l'élément de protection (62) correspond substantiellement à la taille d'une face latérale de la carte de circuits imprimés (50).

7. Bloc d'accumulateur selon l'une quelconque des revendications précédentes, **caractérisé en ce que** la taille de l'élément de protection (62) est adaptée à la taille d'une partie de boîtier (58) du boîtier (12).

8. Bloc d'accumulateur selon l'une quelconque des revendications précédentes, **caractérisé en ce qu'**une épaisseur (64) de l'élément de protection (62) correspond au moins à une hauteur de l'électronique (38), en particulier au moins à une hauteur de l'élément de commande (56) ou de l'élément lumineux (54).

9. Bloc d'accumulateur selon l'une quelconque des revendications précédentes, **caractérisé en ce que** l'élément de protection (62) est réalisé à partir d'un film polymère.

10. Bloc d'accumulateur selon l'une quelconque des revendications précédentes, **caractérisé en ce que** l'élément de protection (62) change de forme sous l'effet d'une force et retrouve sa forme d'origine lorsque la force active est supprimée.

11. Bloc d'accumulateur selon l'une quelconque des revendications précédentes, **caractérisé en ce que** l'élément de protection est réalisé de manière à pouvoir être tassé d'au moins 10 % de son épaisseur.

12. Bloc d'accumulateur selon l'une quelconque des revendications précédentes, **caractérisé en ce que** l'élément de protection (62) à l'état monté est réalisé de manière tassée en particulier au maximum de 10 % de son tassement maximal, de préférence au maximum de 25 % de son tassement maximal, de préférence au maximum de 50 % de son tassement maximal.
